# EUROPEAN PATENT APPLICATION

(11) **EP 1 879 253 A1**
(43) Date of publication of application: **16.01.2008**
(21) Application number: 06116904.1
(22) Date of filing: 10.07.2006
(51) Int. Cl.: H01M 10/42, H02J 7/00, B25F 5/00

(54) **Composite battery pack of power tool**

(71) Applicant: Apogee Power, Inc., Campbell CA 95008 (US)
(72) Inventor: Lin, Wen-Hen, Wujie Township, Yilan County (TW); Tsai, Keh-Chi, Saratoga, CA 95070 (US); Lawson, James M., Campbell, CA 95008 (US); Bell, Gregory R., Campbell, CA 95008 (US)
(74) Representative: Viering, Jentschura & Partner

(57) **Abstract**

A composite battery set of a power tool, comprising a battery, a non-polarity ultracapacitor, a switch, a motor, etc. The ultracapacitor is a non-polarity ultracapacitor, and the power released by the fully charged battery at a high discharge rate is utilized to drive a motor. As such, a switch is used to switch and connect the non-polarity ultracapacitor to the different polarities of the motor, thus achieving the switching of the rotation directions of the motor.

## Description

### BACKGROUND

### Field of Invention

The present invention relates to a composite battery set of a power tool, and more particularly to a composite battery set composed of a metal-ceramic ruthenium-oxide ultracapacitor or nitride ultracapacitor.

### Related Art

In general, a conventional power tool is provided with a nickel-cadmium (Ni-Cd) battery or nickel-metal-hydride (Ni-MH) battery as the source of power supply. Though the Ni-Cd battery and Ni-MH battery have a high discharge rate, yet their performances of power density and discharge duration are still not quite satisfactory. In addition, the Ni-Cd battery has the problem of heavy metal pollution caused by the scrap batteries, thus it has gradually been phased out of the market considering the rising environment protection sentiment; the Ni-MH battery has the disadvantage of having a high discharge temperature due to its intrinsic high impedance.

On the other hand, in recent years the lithium-ion (Li-ion) battery has been very popular and widely utilized because of its compact size, light weight, high power density, and non-memory effect, thus fulfilling the requirement of having a thinner profile and easy recharge of the electronic equipment. Moreover, the operation voltage of the Li-ion battery is three times that of other secondary batteries. As such, in the prior art, the lithium-ion battery is widely utilized as the power supply of power tools.

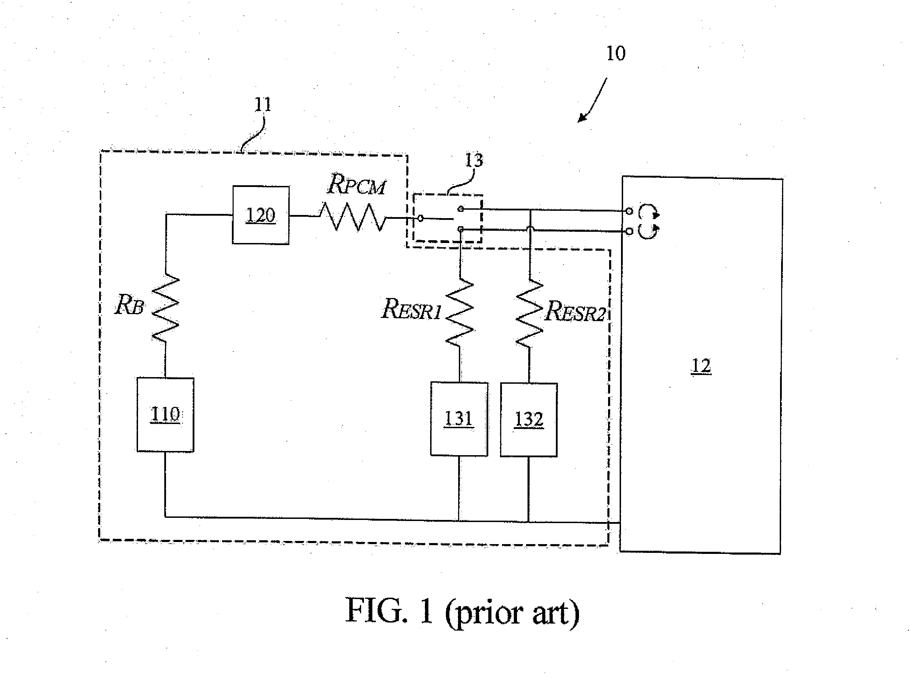

As shown in F1G. 1, it is a schematic diagram of a composite battery set of a power tool according to the prior art. The power tool 10 includes a composite battery set 11 and a load 12. The composite battery set 11 is used to provide power required by the load 12, including a battery 110, a battery internal resistance R_{B}, a protective circuit module (PCM) 120, a PCM internal resistance R_{PCM}, capacitors 131,132, and their equivalent series resistances (ESR) R_{ESR1}, R_{ESR2}. Also, as shown in FIG. 1, the protective circuit module (PCM) 120 series connected with a battery 110 is used to control the cut-off voltage and surge current during the charging and discharging of the battery, hereby preventing a short circuit and damage of the battery cell of the Li-ion battery. The composite battery set 11 further includes two sets of capacitors 131 and 132 of different polarities connected in parallel respectively with the load 12, and a switch 13, which is used to switch the circuit to be connected to the capacitors 13 1 or 132 of different polarities, as such providing the load 12, such as a motor device, with the power required for generating forward rotation or reverse rotation. When the switch 13 operates and connects the series-connected circuit of the battery 110 to the capacitor 131, then the battery is used to proceed with the charging of the capacitor 131. At this time, the power required for the operation of the load 12 is supplied by the capacitor 132. The operation proceeds in a similar manner in case the switch 13 operates and connects the series-connected circuit of the battery 110 to the capacitor 132.

However, the major feature of the conventional composite battery set is that a switch is utilized to proceed with the switching of the circuit between two sets of capacitors of different polarities. Though, in this manner, the forward and reverse rotations of the power tool motor can be achieved, yet it has the drawbacks of high equivalent series resistance and slow charging and discharging speeds of the conventional capacitor.

In addition, in the prior art, an ultracapacitor is utilized to replace the conventional capacitor. The capacitance of the ultracapacitor is several thousands to ten thousands that of the conventional capacitor, thus the instantaneous power released is much stronger. As such, it is especially suitable for a device requiring high instantaneous power, such as power tools. Therefore, the application of the ultracapacitor composite Li-ion battery may indeed improve the shortcomings of the insufficient instantaneous power provided by an ordinary capacitor. Moreover, due to the non-polarity characteristics of the ultracapacitor, only a single ultracapacitor is sufficient in the composite battery set, to realize the forward and reverse rotations of the motor of the power tool. However, the conventional ultracapacitor is made of a carbon-based capacitor, thus the composite battery set of the composite Li-ion battery, using such ultracapacitors may be utilized to enhance the pulse discharge capability of the battery set. Yet, due to the restrictions of the material characteristics of the carbon-based ultracapacitor, the intrinsic impedance of the composite battery set is still pretty high.

### SUMMARY OF THE INVENTION

According to one aspect of the present invention, a composite battery set is provided for a power tool, wherein the composite battery set is used to provide the power required for the operation of the motor of the power tool.

The composite battery set includes a protective circuit module and an ultracapacitor. The ultracapacitor is a non-polarity ultracapacitor, such as a metal-ceramic ruthenium-oxide ultracapacitor or a nitride ultracapacitor, in which the features of the chemical reaction are utilized, so that the instantaneous power released is much stronger. As such, it is particularly suitable for a device requiring high instantaneous power, such as a power tool.

Besides, the non-polarity ultracapacitor having the characteristics of a high power discharge rate, small internal resistance and low power consumption of a non-polarity ultracapacitor is utilized to provide sufficient power for the operation of a motor. In addition, a switch is used to switch and control the non-polarity ultracapacitor to the different polarity of the motor, hereby achieving the switching of the motor operation direction. Moreover, the non-polarity ultracapacitor is used to provide buffering and voltage stabilizing effects, so that the size of the power supply module of the device can be reduced, and the operation duration and service life of the battery can be prolonged, thus fully utilizing the capacity of the battery.

Accordingly, it is an object of the present invention to provide a composite battery set which may operate for a long period of time without generating excessive heat.

Another object of the present invention is to provide a composite battery set, which has less power loss so as to raise the capacity utilization rate and prolong the operation period of the battery inside the composite battery set

A still further object of the present invention is to provide a composite battery set to increase the service life of the battery.

Another object of the present invention is to provide a composite battery set, which needs fewer batteries to achieve the same purpose of driving the motor device.

Further scope of applicability of the invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The invention will become more fully understood from the detailed description given hereinbelow for illustration only, and thus is not limitative of the invention, wherein:
FIG. 1 is a schematic diagram of a composite battery set of a power tool according to the prior art; and
FIG. 2 is a schematic diagram of a composite battery set of a power tool according to an embodiment of the present invention.

### DETAILED DESCRIPTION OF THE INVENTION

The purpose, construction, features, and functions of the invention can be appreciated and understood more thoroughly through the following detailed description with reference to the attached drawings.

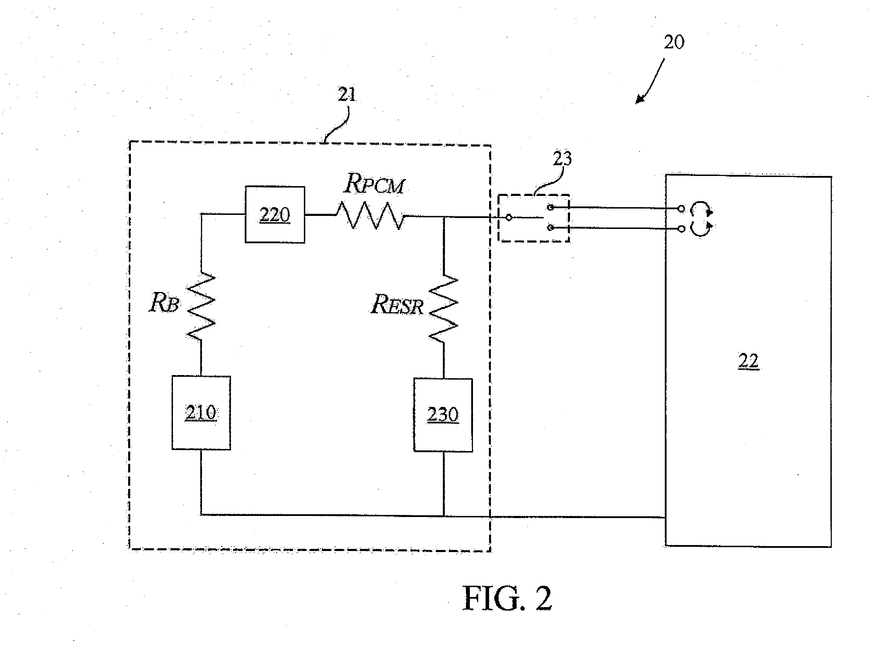

Firstly, as shown in FIG. 2, it is a schematic diagram of a composite battery set of a power tool according to an embodiment of the invention. The power tool 20 includes a composite battery set 21 and a load 22. The composite battery set 21 includes a battery 210, a battery internal resistance R_{B}, a protective circuit module 220, a protective circuit module internal resistance R_{PCM}, an ultracapacitor 230, and its equivalent series resistance R_{ESR}. The composite battery set 21 is connected in parallel with the load 22 and is used to provide power required by the load 22. The functions and capabilities of the protective circuit module 220 are the same as those of the prior art mentioned earlier, and they will not be repeated here for brevity's sake. The switch 23 is used to switch and connect the composite battery set 21 to the different polarities of the load 22. The actual number of various components utilized in the composite battery set 21 is not restricted to those as shown in FIG. 2. Namely, is can be composed of a plurality of the same elements connected in series or in parallel. For instance, the composite battery set 21 may be composed of at least one battery 210 and one battery internal resistance R_{B} connected in series or the composite battery set 21 may be composed of at least one ultracapacitor 230 connected in series with its equivalent series resistance R_{ESR}.

In the embodiment of the present invention, the battery 210 may be a Li-ion battery or Li polymer battery. The ultracapacitor 230 usually refers to a non-polarity ultracapacitor, such as a metal-ceramic ruthenium-oxide ultracapacitor, platinum-based ultracapacitor, or gold-based ultracapacitor. All these types of ultracapacitors have the characteristics of a low resistance and quick response pulse rising time, which can be used to effectively reduce the overall impedance of the battery set, and shorten the pulse rising time, so that the instantaneous power released by the battery set can be stronger, and the signal response time of the electronic device is reduced. In the present embodiment, the composite battery set 21 is composed of the above-mentioned various batteries 210 and the ultracapacitor 230. The load 22 could be an electronic device, such as a motor.

Furthermore, as shown in FIG. 2, the features and functions of a battery 210 and ultracapacitor 230 are mutually complimentary. As such, in the composite battery set 21, the purpose of the ultracapacitor 230 is to reduce the overall impedance R of the composite battery set 21, that is used to supply a peak current to the load 22, and improve the shortcomings of the prior art, in which the battery 210 is not capable of generating high instantaneous power. Meanwhile, the battery 210 is used to charge the ultracapacitor 230 so that it may function normally.

In the above-mentioned structure, the load 22 is, for example, the motor device of a power tool. In order to drive the motor, it is required to provide a higher peak current. The utilization of the ultracapacitor 230 is to take the burden from the battery 210. The switch 23 is used to switch and connect the composite battery set 21 to the different polarities of the load 22. As such, the non-polarity ultracapacitor 230 is connected to the different polarities of the load 22, thus providing the power required for the forward and reverse rotations of the motor. In this respect, the composite battery set 21 composed of a battery 210 and an ultracapacitor 230 may be utilized to solve the problem of the prior art, of which the details are given as follows.
(1) Through the application of the ultracapacitor 230, in cooperation with the battery 210, the peak current, flowing through the battery 210, is decreased, consequently, the heat generated by the current is significantly reduced. Meanwhile, since the equivalent series resistance R_{ESR} of the ultracapacitor 210 is relatively small, the overall impedance R of the composite battery set 21 is reduced drastically, as such increasing the current supplied to the load 22. In addition, since the impedance of the ultracapacitor 230 is relatively small, overheating will not occur. Therefore, the entire composite battery set 21 may operate for a long period of time, without generating excessive heat.
(2) Through the application of the ultracapacitor 230, in cooperation with the battery 210, increasing the capacity utilization rate, and thus the volume energy density and the weight energy density of the battery 210, can be achieved. Before the utilization of the ultracapacitor 230, when the voltage of the battery 210 has dropped to a specific level, the sluggish response time of the battery 210 will lead to energy loss during voltage drop. The utilization of the ultracapacitor 230 enables the reduction of the time required for charging and discharging of the battery 210. As a result, power loss is reduced significantly, as such raising the capacity utilization rate and prolonging the operation period of the battery 210.
(3) Through the application of the ultracapacitor 230, in cooperation with the battery 210, the battery 210 still can maintain an adequate charge and discharge rate, even when a peak current is supplied to the load 22, thus improving the charging and discharging frequency of the battery 210. As such, the service life of the battery 210 can be prolonged.
(4) Through the application of the ultracapacitor 230, in cooperation with the battery 210 driving the motor device, the non-polarity ultracapacitor 230 can be used to compensate the insufficient capacity of the conventional polarity-capacitor that requires the utilization of two sets of conventional polarity-capacitors for charging and discharging the battery alternatively, to provide the power needed for driving a motor in forward and reverse rotations. In addition, the number of batteries utilized can be reduced since they are capable of providing a high current. In the prior art, ten series-connected Ni-Cd batteries are required in the power tool to provide a sufficient current for driving the motor. However, through the application of the invention, only four series-connected Li-ion batteries are required in the composite battery set 21, to achieve the same purpose.

Knowing the invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A composite battery set of a power tool, used to provide a power required for driving a motor of said power tool, comprising:
at least one battery, used to provide said power to said motor;
at least one protective circuit module, series-connected to said battery to form a series-connected set, and is used to prevent the damage of said battery; and
at least one ultracapacitor, parallel-connected to said series-connected set and said motor;
wherein said power tool includes a switch, which is used to switch and connect electrically said composite battery set of said power tool to the different polarities of said motor, thus switching the rotation directions of said motor.

2. The composite battery set of a power tool as claimed in claim 1, wherein said battery includes at least one Li-ion battery.

3. The composite battery set of a power tool as claimed in claim 1, wherein said battery includes at least one Li-polymer battery.

4. The composite battery set of a power tool as claimed in claim 1, wherein said ultracapacitor includes at least one metal-ceramic ruthenium-oxide ultracapacitor.

5. The composite battery set of a power tool as claimed in claim 1, wherein said ultracapacitor includes at least one nitride ultracapacitor.
